Europäisches Patentamt

(19) European Patent Office

Office européen des brevets

(11) Numéro de publication : **0 043 746**
**B1**

(12) **FASCICULE DE BREVET EUROPÉEN**

(45) Date de publication du fascicule du brevet :
28.11.84

(51) Int. Cl.³ : **G 01 H 3/12**, G 01 H 1/00,
G 01 N 29/00

(21) Numéro de dépôt : **81400919.7**

(22) Date de dépôt : **10.06.81**

(54) **Dispositif d'activation d'un appareil de mesure d'émission acoustique par détection du bruit de fond.**

(30) Priorité : **08.07.80 FR 8015157**

(43) Date de publication de la demande :
**13.01.82 Bulletin 82/02**

(45) Mention de la délivrance du brevet :
**28.11.84 Bulletin 84/48**

(84) Etats contractants désignés :
**BE DE IT**

(56) Documents cités :
**US-A- 3 841 144**
**US-A- 4 111 035**
**US-A- 4 165 458**
**REVUE OF SCIENTIFIC INSTRUMENTATION, vol. 51, nr. 3, Mars 1980, New York, US, H. DUNCAN et al.: "On-line data acquisition system for acoustic emission signals", pages 278-284**
**ULTRASONICS, vol. 16, nr. 3, Mai 1978, Guilford (Sur.), GB, I. GRABEC: "Application of correlation techniques for localization of acoustic emission sources", pages 111-115**

(73) Titulaire : **HOTCHKISS-BRANDT SOGEME H.B.S.**
**186, rue du Faubourg Saint-Honoré**
**F-75008 Paris (FR)**

(72) Inventeur : **Audenard, Bernard**
**THOMSON-CSF SCPI 173, bld Haussmann**
**F-75360 Paris Cedex 08 (FR)**
Inventeur : **Marini, Jean**
**THOMSON-SCF SCPI 173, bld Haussmann**
**F-75360 Paris Cedex 08 (FR)**

(74) Mandataire : **Barbin le Bourhis, Joel et al**
**THOMSON-CSF SCPI 173, boulevard Haussmann**
**F-75379 Paris Cedex 08 (FR)**

Jouve, 18, rue St-Denis, 75001 Paris, France

## Description

La présente invention concerne un dispositif d'activation d'un appareil de mesure d'émission acoustique par détection du bruit de fond. Elle trouve application dans le domaine du contrôle industriel par émission acoustique.

Dans les installations industrielles soumises à de fortes contraintes, il existe un certain nombre de phénomènes générateurs de sons qui se propagent sur les structures. Il sont de deux types :

— les chocs par percussion de parties solides sur des obstacles fixes (ailette de turbine se décrochant),

— les craquements par fissuration (fissures dans les blocs de béton).

D'autres sons ou bruits sont aussi propagés dans d'autres bandes de fréquence. Il s'agit en particulier des bruits d'écoulements fluides dans les canalisations, les vibrations de pièces tournantes mals équilibrées, etc. Des systèmes d'acquisition de données par émission acoustique doivent donc emmagasiner un grand nombre de données inutiles. En effet, dans l'exemple du circuit de fluide avec pompe, les risques de projection de particules solides n'apparaissent comme critiques que si la pompe est en fonctionnement. Les systèmes d'acquisition de l'art antérieur enregistreront sans distinguer tout ce qui se passe avant le démarrage de la pompe.

Par ailleurs, il est connu par le document « Review et Scientific Instrumentation » (Vol 51, nr. 3, MARS 1980, New York US, H. DUNCAN et al.) un système d'acquisition qui relie un circuit de détection à des moyens de comparaisons pour enregistrer des informations relatives à des événements acoustiques plus forts qu'un seuil donné. Cependant, ce système enregistre au même titre les signaux délivrés par le circuit de détection, que ceux-ci soient significatifs ou non.

Pour porter remède à cet inconvénient majeur de l'art antérieur, la présente invention propose un dispositif d'activation d'un appareil de mesure d'émission acoustique du type comportant un circuit de détection du bruit de fond recueilli par des capteurs de l'appareil de mesure, des moyens de comparaison du signal détecté à un niveau de référence et des moyens pour produire un signal de sortie quand les moyens de comparaisons indiquent que le niveau du bruit de fond est supérieur au niveau de référence, caractérisé par le fait qu'il comporte un organe d'acquisition des données à base de temps à fréquence réglable commandée par le comparateur.

L'invention sera mieux comprise à l'aide de la description et des figures annexées qui sont :

la figure 1  un schéma d'un dispositif selon l'invention,

la figure 2  deux diagrammes de fonctionnement.

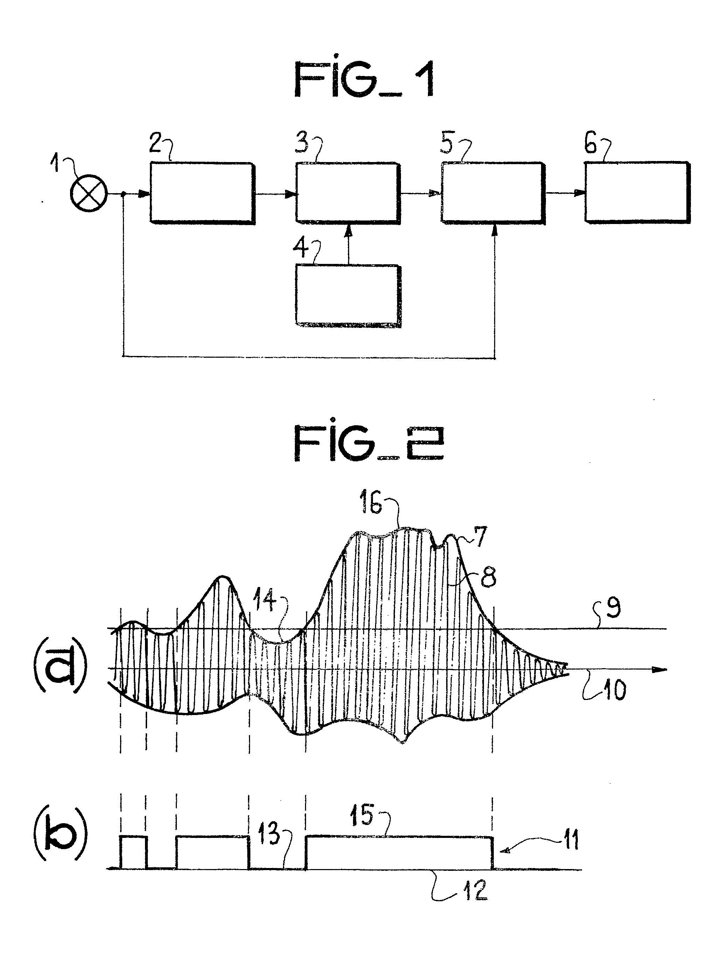

La figure 1 représente un dispositif selon l'invention. Il comporte un comparateur 3 qui reçoit d'une part une tension de référence d'un organe de contrôle 4 et un signal d'un circuit de détection 2, des impulsions électriques fournies par un capteur 1 des émissions acoustiques. Ce circuit de détection 2 peut être constitué par un intégrateur de niveau moyen du bruit de fond. Ce dernier circuit permet de fournir l'enveloppe des maximas positifs du bruit de fond, dit niveau de bruit.

Quand le niveau de bruit est inférieur au niveau de la référence choisie, le comparateur est à zéro. Quand il dépasse la référence, le comparateur bascule et commande l'appareil de mesure. Celui-ci prend alors en compte les signaux reçus par les divers capteurs.

L'augmentation du niveau de bruit de fond est causé en particulier par le début d'une phase critique du fonctionnement de l'installation surveillée. Dans le cas d'un circuit de fluide, le démarrage de la pompe induit un bruit de fond. Celui-ci, détecté par le circuit 2, déclenche le comparateur 3, l'organe de contrôle 4 fournissant une référence convenablement choisie.

A la figure 2 on remarque, en 2a, le niveau zéro de tension 10, le bruit de fond 8, sa modulation 7 et la tension de référence 9. En 2b, on remarque le zéro de tension 12 et la réponse du comparateur 3 quand la modulation 7 est plus grande que la référence 9, le comparateur émet un signal. Ainsi le créneau 15 est la réponse du comparateur 3 au pic de modulation 16.

Il peut arriver que d'autres bruits de fond apparaissent que celui servant à déclencher le comparateur. Dans l'exemple du circuit de fluide, le bruit de fond qui active l'appareil de mesure est celui émis par la pompe. A distance et en dehors du circuit, un autre bruit de fond qui apparaît à un niveau suffisant peut réactiver l'appareil de mesure. Pour éviter cela, on réalise avant la détection de la modulation par le circuit détecteur 2, une discrimination par corrélation spectrale. En effet, dans une large mesure, le spectre fréquenciel d'émission acoustique est caractéristique de la source d'émission. Il est donc possible de ne sélectionner l'accès au circuit de détection que pour les bruits de fond corrélés avec un spectre de référence prédéterminé.

Le corrélateur de spectre peut être connecté à l'entrée du dispositif après le capteur 1 (par exemple, capteur piézoélectrique) et valider ou non le circuit de détection 2 par une entrée spéciale de ce circuit.

L'ensemble 5 d'acquisition des données fait partie intégrante de l'appareil de détection complet auquel le dispositif d'activation selon l'invention est couplé. Il comporte en particulier une base de temps d'acquisition des données qui seront alors traitées dans l'ensemble 6 de traitement. La base de temps d'acquisition est du type à fréquence réglable. Ainsi, quand le dispositif d'activation selon l'invention ne détecte aucun bruit de fond capable de le déclencher, c'est-à-dire quand le niveau de bruit est en dessous du seuil critique décidé ou l'organe de référence 4, la base de temps d'acquisition fournit une fréquence f choisie relativement faible. L'ensemble 5 d'acquisition des données réalise alors par exemple un échantillonnage lent des signaux en provenance du capteur 1, toutes les 1/f secondes. Quand on relève un fort niveau de bruit de fond, le signal émis par le comparateur 3 commute la base de temps d'acquisition sur une fréquence de fonctionnement F nettement plus grande que la fréquence f dite de veille. L'échantillonnage sera alors beaucoup plus rapide, toutes les 1/F secondes. Le flux de données à traiter est alors en nette augmentation.

La présente invention permet donc de réaliser une surveillance sélective des diverses émissions acoustiques dans une installation industrielle qui peut être d'une taille importante en fonction de seuils de risques prédéterminés de façon à limiter le nombre des données de surveillance recueillies sur le capteur 1 quand il est peu probable que celles-ci seront des incidences d'accidents.

Le dispositif d'activation selon l'invention peut, selon les diverses configurations de l'appareil de mesure d'émission acoustique, prendre des formes diverses. Ainsi, si l'appareil de mesure comprend de nombreux capteurs mais, que l'installation surveillée ne comporte qu'une source de bruit éventuellement critique, le dispositif d'activation selon l'invention sera placé sur un seul des capteurs convenablement choisi. Les autres capteurs seront directement reliés à l'ensemble 5 d'acquisition des données à traiter.

Si plusieurs bruits de fond sont des indices de seuils critiques, le lot de capteurs peut être partagé en sous-ensembles distincts. A chaque sous-ensemble de capteurs est associé un dispositif d'activation et un ensemble 5 d'acquisition des données.

D'autre part, la présente invention s'applique à différentes chaînes d'acquisition de données d'origine acoustique. Le capteur 1 peut ainsi comporter un préamplificateur si les distances au point de pose du capteur sont élevées. Le capteur 1 envoie des signaux électriques qui peuvent être redressés par un dispositif redresseur mono ou double alternance par exemple à diodes semiconductrices.

## Revendications

1. Dispositif d'activation d'un appareil de mesure d'émission acoustique du type comportant un circuit de détection (2) du bruit de fond recueilli par des capteurs (1) de l'appareil de mesure, des moyens de comparaison (3) du signal détecté à un niveau de référence (9) et des moyens pour produire un signal de sortie quand les moyens de comparaisons indiquent que le niveau du bruit de fond (16) est supérieur au niveau de référence, caractérisé par le fait qu'il comporte un organe d'acquisition (5) des données à base de temps à fréquence réglable commandée par le comparateur (3).

2. Dispositif selon la revendication 1, caractérisé par le fait que la base de temps scrute à une première fréquence (f) les moyens de détection quand aucun signal de sortie n'est produit et à une deuxième fréquence (F), plus grande que la première, quand un signal de sortie est produit.

3. Dispositif selon la revendication 1, caractérisé par le fait que le circuit de détection (2) du bruit de fond comporte un intégrateur du niveau moyen.

4. Dispositif selon la revendication 3, caractérisé par le fait que le circuit de détection (2) du bruit de fond comporte un corrélateur qui reçoit un signal qui permet de faire une discrimination spectrale.

## Claims

1. Device for activating an apparatus for the measuring of acoustic emission, of the type comprising a detection circuit (2) for detecting the background noise collected by the probes (1) of the measuring apparatus, means (3) for comparing the detected signal to a reference level (9) and means for producing an output signal when the comparing means indicate that the level of the background noise (16) exceeds the reference level, characterized by the fact that it comprises a data acquisition member (5) having a time base with adjustable frequency controlled by the comparator (3).

2. Device according to claim 1, characterized by the fact that the time base samples the detection means at a first frequency (f) when no output signal is produced and at a second frequency (F) exceeding the first when an output signal is produced.

3. Device according to claim 1, characterized by the fact that the detection circuit (2) for detecting the background noise comprises an average level integrator.

4. Device according to claim 3, characterized by the fact that the detection circuit (2) for detecting by background noise comprises a correlator receiving a signal allowing a spectral discrimination to be performed.

## Ansprüche

1. Vorrichtung zur Aktivierung eines Meßgerätes zur Schallemissionsmessung, mit einer Detektionsschaltung (2) zur Erfassung des von den Meßwertaufnehmern (1) des Meßgerätes aufgenommenen Hintergrundgeräusches, mit Vergleichermitteln (3) zum Vergleichen des erfaßten Signals mit einem Bezugspegel (9) und Mitteln zur Erzeugung eines Ausgangssignals, wenn die Vergleichermittel anzeigen, daß der Pegel des Hintergrundgeräusches (16) den Bezugspegel überschreitet, dadurch gekennzeichnet, daß sie ein Datenerfassungsorgan (5) mit einer Zeitbasis umfaßt, deren Frequenz einstellbar und durch den Vergleicher (3) gesteuert ist.

2. Vorrichtung nach Anspruch 1, dadurch gekennzeichnet, daß die Zeitbasis die Detektionsmittel mit einer ersten Frequenz (f) abfragt, wenn keinerlei Ausgangssignal erzeugt wird, und mit einer zweiten, die erste überschreitenden Frequenz (F) abfragt, wenn ein Ausgangssignal erzeugt wird.

3. Vorrichtung nach Anspruch 1, dadurch gekennzeichnet, daß die Detektionsschaltung (2) zur Erfassung des Hintergrundgeräusches einen Pegelmittelwert-Integrator umfaßt.

4. Vorrichtung nach Anspruch 3, dadurch gekennzeichnet, daß die Detektionsschaltung (2) zur Erfassung des Hintergrundgeräusches einen Korrelator enthält, der ein Signal empfängt, welches die Durchführung einer Spektraldiskriminierung ermöglicht.

**0 043 746**

# FIG_1

# FIG_2

1